# EUROPEAN PATENT SPECIFICATION

(11) **EP 4 430 216 B1**
(45) Date of publication and mention of the grant of the patent: **15.10.2025**
(21) Application number: 22803397.3
(22) Date of filing: 10.11.2022
(51) Int. Cl.: C21B 13/00, B30B 11/16, C22B 1/24

(54) **AN APPARATUS FOR PRODUCING HOT BRIQUETTED IRON**
VORRICHTUNG ZUR HERSTELLUNG VON HEISSEM BRIKETTIERTEM EISEN
APPAREIL DE PRODUCTION DE FER BRIQUETÉ À CHAUD

(30) Priority: 11.11.2021 SE 2151381
(43) Date of publication of application: 18.09.2024
(73) Proprietor: HYBRIT Development AB, 111 64 Stockholm (SE)
(72) Inventor: SUUP, Anna-Maria, 975 61 Luleå (SE); RUONA, Tommy, 973 42 Luleå (SE)
(74) Representative: Zacco Sweden AB
(86) International application number: PCT/SE2022/051046
(87) International publication number: WO 2023/086002

(56) References cited:
- GB-A- 2 074 497
- JP-A- S59 133 334
- SE-A1- 2 050 508

## Description

### TECHNICAL FIELD

The present disclosure relates to an apparatus for producing hot briquetted iron, as well as a method for producing hot briquetted iron using such an apparatus.

### BACKGROUND ART

Steel is the world's most important engineering and construction material. It is difficult to find any object in the modern world that does not contain steel, or depend on steel for its manufacture and/or transport. In this manner, steel is intricately involved in almost every aspect of our modern lives.

In 2018, the total global production of crude steel was 1 810 million tonnes, by far exceeding any other metal, and is expected to reach 2800 million tonnes in 2050 of which 50% is expected to originate from virgin iron sources. Steel is also the world's most recycled material with a very high recycling grade due to the metals' ability to be used over and over again after remelting, using electricity as the primary energy source.

Thus, steel is a cornerstone of modern society with an even more significant role to play in the future.

Steel is mainly produced via three routes:
i) Integrated production using virgin iron ores in a blast furnace (BF), where iron oxide in the ore is reduced by carbon to produce iron. The iron is further processed in the steel plant by oxygen blowing in a basic oxygen furnace (BOF), followed by refining to produce steel. This process is commonly also referred to as 'oxygen steelmaking'.
ii) Scrap-based production using recycled steel, which is melted in an electric arc furnace (EAF) using electricity as the primary source of energy. This process is commonly also referred to as 'electric steelmaking'.
iii) Direct reduction production based on virgin iron ore, which is reduced in a direct reduction (DR) process with a carbonaceous reducing gas to produce sponge iron. Shaft-based processes produce sponge iron pellets (DRI), whereas other process may produce sponge iron fines. Both DRI and sponge iron fines may be compacted to produce hot briquetted iron (HBI), a form of sponge iron that is more suitable for transport. The sponge iron is subsequently melted together with scrap in an EAF to produce steel.

The term crude iron is used herein to denote all irons produced for further processing to steel, regardless of whether they are obtained from a blast furnace (i.e. pig iron), or a direct reduction shaft (i.e. sponge irons such as DRI, HBI or sponge iron fines).

Although the above-named processes have been refined over decades and are approaching the theoretical minimum energy consumption, there is one fundamental issue not yet resolved. Reduction of iron ore using carbonaceous reductants results in the production of CO2 as a by-product. For every ton steel produced in 2018, an average of 1.83 tonnes of CO2 were produced. The steel industry is one of the highest CO2-emitting industries, accounting for approximately 7% of CO2 emissions globally. Excessive CO2-generation cannot be avoided within the steel production process as long as carbonaceous reductants are used.

The HYBRIT initiative has been founded to address this issue. HYBRIT, short for HYdrogen BReakthrough Ironmaking Technology - is a joint venture between SSAB, LKAB and Vattenfall, funded in part by the Swedish Energy Agency, and aims to reduce CO2 emissions and decarbonize the steel industry.

Central to the HYBRIT concept is a direct reduction shaft-based production of sponge iron from virgin ore. However, instead of using carbonaceous reductant gases, such as natural gas, as in present commercial direct reduction processes, HYBRIT proposes using hydrogen gas as the reductant, termed hydrogen direct reduction (H-DR). The hydrogen gas may be produced by electrolysis of water using mainly fossil-free and/or renewable primary energy sources, as is the case for e.g. Swedish electricity production. Thus, the critical step of reducing the iron ore may be achieved without requiring fossil fuel as an input, and with water as a by-product instead of CO2.

However, production of steel from sponge iron produced by hydrogen direct reduction may be subject to some hindrances in downstream steelmaking steps.

Sponge iron produced using traditional fossil-based carbonaceous reductants typically comprises significant amounts of dispersed carbon (typically up to 5 wt%), due to carbon incorporation from the carbonaceous reducing gas during reduction of the iron ore. The dispersed carbon is predominantly in the form of cementite (Fe₃C), with a lesser proportion consisting of graphite dispersed throughout the sponge iron. The eutectic (melting) temperature of the iron-cementite system is 1147 °C (lower than the melting point of pure iron, 1536 °C), and cementite exothermally dissociates in the molten bath, assisting in melting of the sponge iron. Sponge iron produced by hydrogen direct reduction naturally lacks cementite and therefore is more difficult to melt in the EAF. This can lead to higher electricity requirements in the EAF melting step, excessive consumption of the EAF electrodes, and extended tap-to-tap times. Patent document GB 2 074 497 A further relates to an apparatus for producing hot briquetted iron.

There remains a need for a means of producing steel in an effective and more environmentally friendly manner.

### SUMMARY OF THE INVENTION

The inventors of the present invention have found that the downstream processing advantages typically obtained by having dispersed cementite in the sponge iron can also be substantially obtained by briquetting carbon-free sponge iron pellets together with carbon powder. That is to say that it has been found that briquettes of carbon-free iron with admixed carbon melt almost as well as corresponding briquettes produced using conventional fossil-based sponge iron and provide effective reduction of residual iron oxide in the sponge iron. However, in order to reliably obtain such advantages, it is essential that the carbon is well-mixed with the sponge iron pellets when briquetting. Inhomogeneous distribution of carbon may lead to uneven or unpredictable behaviour when briquetting and/or in downstream processing in a melting furnace. For example, if the ratio of carbon to iron in the hot briquetted iron varies due to inhomogeneous distribution, then further addition of excessive amounts of additional carbon and/or fluxes may be required in a downstream melting stage in order to provide a reproducible melt behaviour and/or composition.

The most widespread and energy-effective means of briquetting sponge iron pellets is by hot briquetting. This typically entails force-feeding sponge iron pellets that are still hot from the direct reduction step through a briquetting press comprising two synchronously counter-rotating pocketed rollers. A screw feeder arranged in a material supply tank is typically used to force-feed the sponge iron. Such a hot briquetting apparatus is effective when the feed consists only of sponge iron pellets, and thereby is relatively homogenous in terms of size, density and composition.

The inventors have however recognised that traditional means of hot briquetting may give rise to partitioning and segregation of the material if a mixture of two materials having different sizes, densities and compositions is used. In turn, such segregation may risk carbon being inhomogenously distributed in the hot briquetted iron, or in the worst case may lead to hot briquetted iron essentially lacking in carbon, with the carbon powder instead being accumulated in the material supply tank.

Although discussed herein primarily with respect to carbon powder, the same problems may arise when attempting to admix other powders with sponge iron pellets, such as fluxes in order to obtain self-fluxing briquettes.

It would be advantageous to achieve a means of overcoming, or at least alleviating, at least some of the above mentioned shortcomings. In particular, it would be desirable to provide an effective means of producing hot briquetted iron comprising more homogenously admixed powder. In order to better address one or more of these concerns, an apparatus for producing hot briquetted iron having the features defined in the appended independent claim is provided.

The apparatus comprises a briquetting press as disclosed in appended claims 1-7.

Since the relatively fine powder is injected with velocity into a volume occupied by the relatively large and porous iron ore pellets, the powder will be well-distributed throughout the pellets, not merely accumulated at the outlet of the injection line. This decreases the risk for inhomogeneous distribution of powder.

Each line outlet may be arranged to be able to inject powder into a volume occupiable by the screw flighting and/or into a volume in proximity to the nip of the briquetting press.

The volume occupiable by the screw flighting together with the volume in proximity to the nip of the briquetting press define a force-fed volume of the apparatus for producing HBI. That is to say that during operation, any material present in this force-fed volume will be actively force-fed to the briquetting press, and will not risk being passively resident in the material supply tank. Thus, by injecting the powder to be admixed with the sponge iron pellets into this force-fed volume, the risk for material segregation and inhomogeneous distribution of powder is further decreased.

According to another unclaimed aspect of the invention, the objects of the invention are achieved by a method according to the appended independent claims for producing hot briquetted iron (HBI) comprising a powder.

The method comprises the following steps. Hot sponge iron pellets are provided to the material supply tank of the apparatus as described herein and defined in the appended independent claims. The hot sponge iron pellets are conveyed towards the nip of the briquetting press using the screw feeder. Powder is provided to the powder dosing unit of the apparatus. Pressurized carrier gas is provided to the line inlet of the injection line in order to obtain a predetermined gas flow. The powder is dosed at a predetermined rate to the injection line, thereby injecting the powder into the material supply tank, thereby forming a mixture of the hot sponge iron pellets and the powder. The rollers are counter-rotated synchronously, thereby briquetting the mixture of the hot sponge iron pellets and the powder.

This method archives the same advantages as previously described in association with the apparatus for producing hot briquetted iron.

Preferably, the powder may be injected into a volume occupiable by the screw flighting and/or into a volume in proximity to the nip of the briquetting press.

Further objects, advantages and novel features of the present invention will become apparent to one skilled in the art from the following detailed description.

### BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:
- Fig. 1: schematically illustrates a prior art apparatus for producing HBI;
- Figs. 2a-c: schematically illustrates potential means of adding powder to sponge iron pellets during production of HBI;
- Fig 3: schematically illustrates an exemplifying embodiment of a first apparatus for injecting powder into sponge iron pellets during production of HBI;
- Fig 4: schematically illustrates an exemplifying embodiment of a second apparatus for injecting powder into sponge iron pellets during production of HBI;
- Fig 5: schematically illustrates an exemplifying embodiment of a third apparatus for injecting powder into sponge iron pellets during production of HBI;
- Fig 6: schematically illustrates an exemplifying embodiment of a fourth apparatus for injecting powder into sponge iron pellets during production of HBI;
- Fig. 7: schematically illustrates an exemplifying embodiment of a fifth apparatus for injecting powder into sponge iron pellets during production of HBI;
- Fig. 8: is a flow chart illustrating an exemplifying embodiment of a method for producing HBI using any of the apparatus as discussed herein.

### DETAILED DESCRIPTION

The invention will now be described in more detail with reference to certain exemplifying embodiments and the drawings. However, the invention is not limited to the exemplifying embodiments discussed herein and/or shown in the drawings, but may be varied within the scope of the appended claims. Furthermore, the drawings shall not be considered drawn to scale as some features may be exaggerated in order to more clearly illustrate certain features.

### Apparatus for producing hot briquetted iron

The disclosure relates to an apparatus for producing hot briquetted iron (HBI).

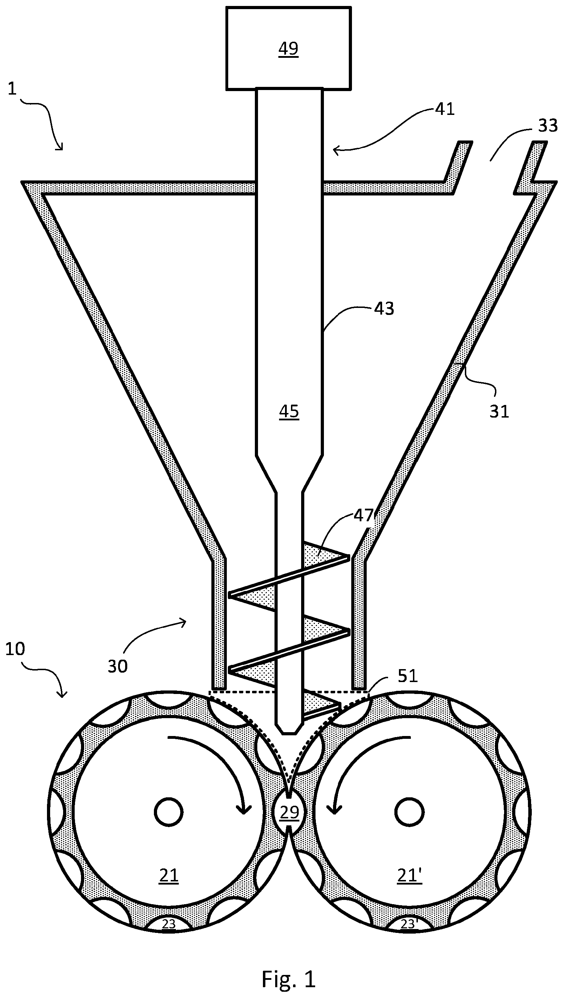

A typical prior-art apparatus for producing hot briquetted iron is illustrated in Figure 1. Such apparatus is commercially available and is widely utilized in the field. Such an apparatus will be briefly described below.

The apparatus 1 for producing HBI comprises a briquetting press 10 and a force feeder arrangement 30 for feeding the hot sponge iron pellet feed to the briquetting press.

The briquetting press 10 comprises two rollers 21, 21'. Each roller comprises a plurality of pockets 23, 23'. The two rollers are arranged to be synchronously counter-rotatable (the direction of rotation indicated by arrows). In synchronously counter-rotating, pockets from each roller align with the same recurring period and phase to form a continuous series of cooperating pockets defining briquetting cavities at a nip 29 of the briquetting press. By "nip" it is meant the region of the press where the rollers are closest together, as is conventional in the art. The rollers 21, 21' may typically be mounted in a frame capable of withstanding the forces arising during briquetting. Typically, one of the rollers may be fixed in the frame, and the other may be movably attached in the frame such that the distance between the rollers may vary. A hydraulic system may typically be arranged to apply force on the movable (floating) roller, thereby controlling the gap between the rollers and the force applied during briquetting. The rollers may typically be turned using a roller drive, which typically comprises a geared electrical motor drive arrangement. The roller drive may be arranged to adjust synchronisation of the rollers and ensure correct alignment of the pockets.

The force feeder arrangement 30 comprises a material supply tank 31 arranged to be able to contain a hot sponge iron pellet feed to be fed to the briquetting press 10. The material supply tank has a tank inlet 33 arranged to be able to receive a hot sponge iron pellet feed. The material supply tank may typically be manufactured of materials capable of withstanding the high prevailing temperatures during operation, and may be insulated in order to avoid excessive heat loss during the briquetting operation.

A screw feeder 41 comprising a screw 43 is arranged within the material supply tank. The screw feeder is arranged to be able to convey the sponge iron pellet feed contained within the material supply tank towards the nip 29 of the briquetting press. The screw comprises a screw shaft 45 and a screw flighting 47 arranged on the shaft at an end of the shaft in proximity to the nip of the briquetting press. The screw shaft may typically be driven by an electric motor drive arrangement 49. The force feeder arrangement may also typically comprise cheek plates (illustrated as dotted line 51) arranged in proximity to the nip of the briquetting press. The cheek plates may serve to prevent leakage of material in conjunction with briquetting.

Support systems may be arranged to ensure correct operation of the briquetting press and force feeder arrangement. For example, a cooling system may be arranged in order to protect various components, including but not limited to the screw shaft, the portion of the material supply tank surrounding the screw flighting, the cheek plates, and the rollers. In order to prevent re-oxidation of the sponge iron, briquetting is typically performed in an inert atmosphere, and therefore an inert seal gas may typically be introduced at various points in the apparatus, such as at the rollers 21, 21' and in the material supply tank 31.

The product obtained from the briquetting press is typically a continuous string of hot briquettes connected head-to-tail. Therefore, the apparatus for producing HBI may further typically comprise a briquette string separator and briquette cooler in order to provide the final product of discrete iron briquettes.

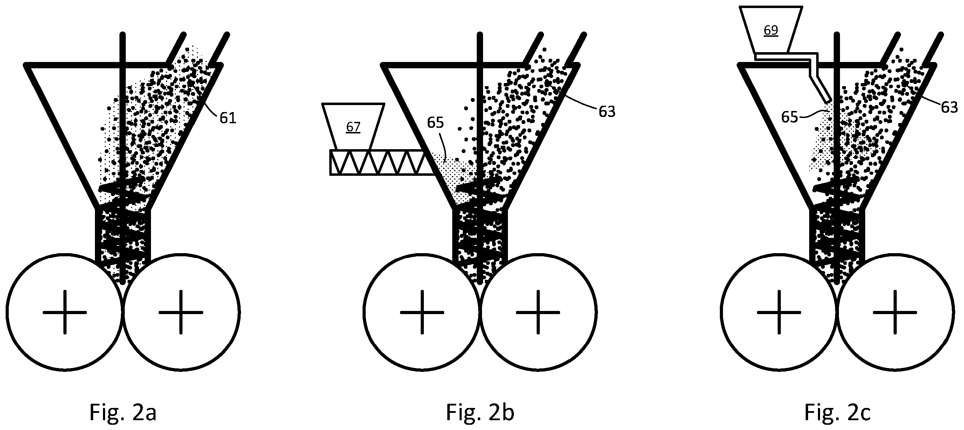

In order to produce a briquette of sponge iron pellets with admixed carbon powder, it could be conceived that a mixed feed 61 comprising the sponge iron pellets 63 and carbon powder 65 may be charged to a prior art apparatus as illustrated in Figure 2a. Alternatively, it could be conceived that carbon powder 65 could be dosed separately and directly to the material supply tank, either through a side wall of the material supply tank using e.g. a screw feeder 67 as illustrated in Figure 2b, or through a lid of the material supply tank using a gravimetric feed device such as a loss-in-weight feeder 69 as illustrated in Figure 2c. However, each of these concepts risks producing briquettes with non-homogenous carbon distribution, due to insufficient mixing of the separately dosed carbon powder with the sponge iron pellets and/or due to partitioning of the original mixture during residence in the material supply tank.

The problem of non-homogeneity is solved in the present disclosure by provision of an apparatus for producing HBI comprising a powder injection arrangement. The apparatus for producing HBI is in other respects similar to conventional apparatus for producing HBI and comprises a briquetting press 10 and force feeder arrangement 30 as described above.

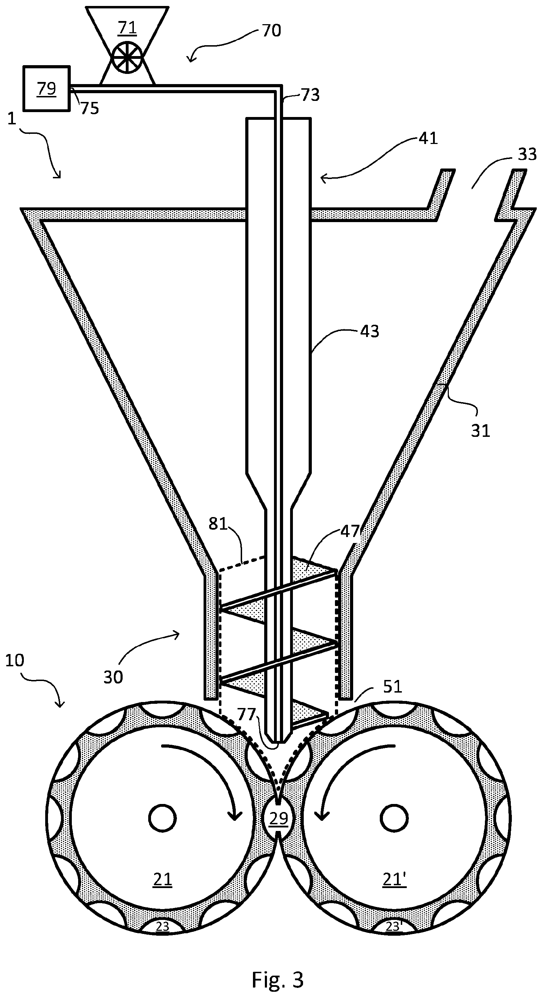

The powder injection arrangement comprises an injection line arranged to be able to inject powder into the material supply tank. In preferred embodiments, the injection line is arranged to be able to inject powder into a volume occupiable by the screw flighting and/or into a volume in proximity to the nip of the briquetting press. That is to say that the powder injection apparatus can inject powder into the force-fed volume of the apparatus for producing HBI. It is foreseen that the injection line(s) may be arranged within the apparatus for producing HBI in a number of different ways, each way having its own specific advantages. Exemplifying embodiments of each of these different ways of arranging injection of the powder are schematically illustrated in Figures 3-8.

By "inject", it is meant to introduce the powder forcefully, in the present case conveyed by a flow of carrier gas. Since the relatively fine powder is injected with velocity into a volume occupied by the relatively large iron ore pellets, the powder will be well-distributed in the interstices between the pellets in the injection area, not merely accumulated at the outlet of the injection line. This decreases the risk for inhomogeneous distribution of powder.

By "able to inject powder into the force-fed volume", it is meant that a substantial proportion, but not necessarily all of the injected powder, may be introduced into the force-fed volume, i.e. the volume occupiable by the screw flighting and/or the volume in proximity to the nip of the briquetting press, even when the apparatus is charged with sponge iron. This proportion introduced into the force-fed volume may be greater than 20 vol%, such as greater than 50 vol%, such as greater than 70 vol%, such as greater than 90 vol%. By injecting the powder to be admixed with the sponge iron pellets into this force-fed volume, the risk for material segregation and inhomogeneous distribution of powder is further decreased.

The powder injection arrangement 70 comprises a powder dosing unit 71 and at least one injection line 73.

The powder dosing unit 71 is arranged to be able to dose powder at a predetermined rate to the at least one injection line 73, and may for example comprise a rotary valve feeder or venturi eductor. Each injection line 73 extends from a line inlet 75 to a line outlet 77. Each line inlet 75 is arranged to be connectible to a source of pressurized carrier gas 79 and each line outlet 77 is arranged in such a manner that the powder dosing unit is able to inject powder into a volume occupiable by the screw flighting and/or into a volume in proximity to the nip of the briquetting press. This combined volume, termed herein the force-fed volume, is illustrated in Figure 3 by dotted line 81. Suitable means for injection of powders are known in the art.

The carrier gas is an inert gas, such as nitrogen or argon. Since hot briquetting is conventionally performed under inert conditions, such a source of carrier gas is typically available on-site. The source of pressurised carrier gas 79 may for example comprise an air separation unit.

The powder injection arrangement 70 may comprise a single injection line, or alternatively, it may comprise a plurality of injection lines. If the powder injection arrangement comprises a plurality of injection lines, such lines may have a common line inlet section connectible to a source of pressurized carrier gas 79, and separate line outlets 77. In such a case, the powder dosing unit may be arranged to be able to dose powder to the common inlet section. Alternatively, each injection line may be discretely connectible to a source of pressurized carrier gas 79, and powder may be supplied to each injection line 73 with a separate powder dosing unit 71.

Each injection line may extend inside of the screw shaft. In such a case, each line outlet is arranged at an end of the screw shaft that is in proximity to the nip of the briquetting press. Such an embodiment may permit dosing of powder in direct proximity to the nip of the briquetting press, thus ensuring that each briquette contains an appropriate ratio of powder to sponge iron and avoiding any possibility of accumulation of powder in the material supply tank. A further advantage is that such an embodiment may be relatively easily retrofitted to existing force feeder arrangements by replacement of the screw feeder, since no modification is required to the material supply tank. An example of such an embodiment is schematically illustrated in Figure 3. The injection line 73 extends from a line inlet 75 arranged exterior to the force feeder arrangement 30, through the screw shaft 45 of the screw feeder 43, and terminates at a line outlet 77 at the end of the screw shaft in proximity to the nip 29 of the briquetting press. The line inlet 75 is connected to a source of pressurized carrier gas 79. The powder dosing unit 71, herein illustrated as a rotary valve feeder, is arranged exterior to the force feeder arrangement.

The injection line may be arranged coaxially within the screw shaft. Conventionally, the screw shaft may be water-cooled. In such a case, the injection line may be arranged coaxially within a cooling channel arranged in the screw shaft. This may assist in preventing volatiles, if present in the powder, from being driven off from the powder during injection.

Solely in conjunction with embodiments wherein each injection line extends inside of the screw shaft, alternative embodiments are also envisioned where the powder may be dosed using gravimetric feeding instead of powder injection. This is because in such embodiments the line outlet is suitably proximate to the nip and the injection line itself has a suitable vertical drop such that powder injection may not strictly be necessary. In such embodiments utilizing gravimetric feeding, the powder dosing unit may be arranged to dose powder to the line inlet, and there is no need to connect the line inlet to a source of pressurized gas to be able to convey the powder. The powder dosing unit may in such cases be for example a loss-in-weight feeder.

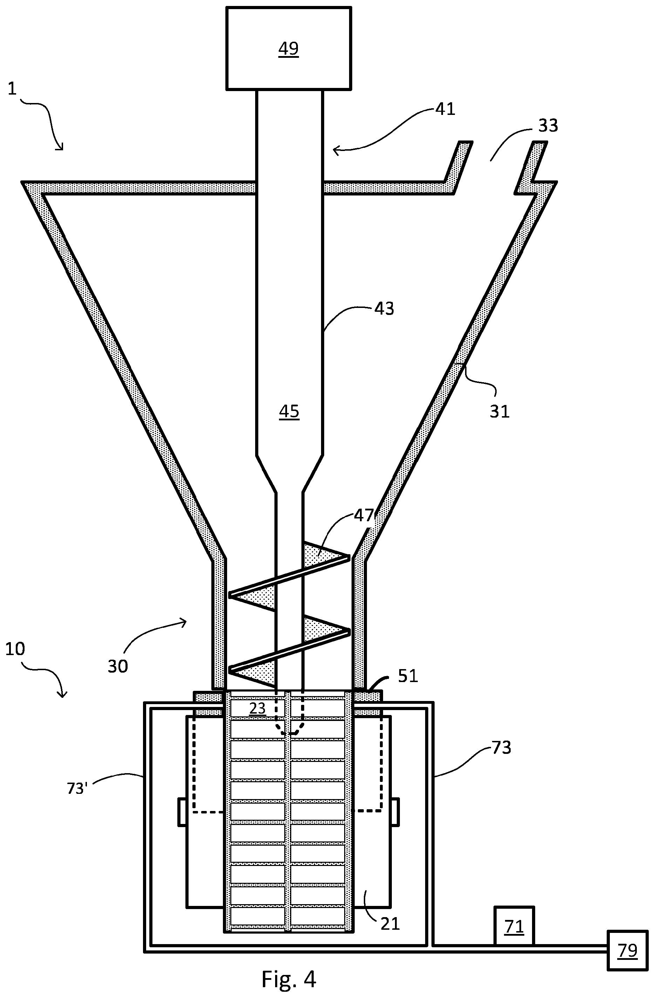

Alternatively, each injection line may extend through a cheek plate of the force feeder arrangement. In such a case, each line outlet is arranged at a face of the cheek plate that is in proximity to the nip of the briquetting press. Such an embodiment may permit dosing of powder in direct proximity to the nip of the briquetting press, thus ensuring that each briquette contains an appropriate ratio of powder to sponge iron and avoiding any possibility of accumulation of powder in the material supply tank. An example of such an embodiment is shown in Figure 4, which schematically illustrates a side-view of the apparatus. In the side view, each cheek plate 51 is partially obscured by the roller 21 and the obscured part is shown as a dotted line. Likewise, the part of the screw shaft 45 obscured by the roller 21 is also shown as a dotted line. Part of the screw flight 47 is deleted for clarity of illustration. The injection line extends through the cheek plate 51 of the force feeder arrangement, and terminates at the interior face of the cheek plate, in proximity to the nip of the briquetting press. In the illustrated embodiment, two injection lines are utilized, one for each cheek plate. The injection lines have a common line inlet section. The line inlet is connected to a source of pressurized carrier gas 79. The powder dosing unit 79 is arranged to provide powder to the common line inlet section.

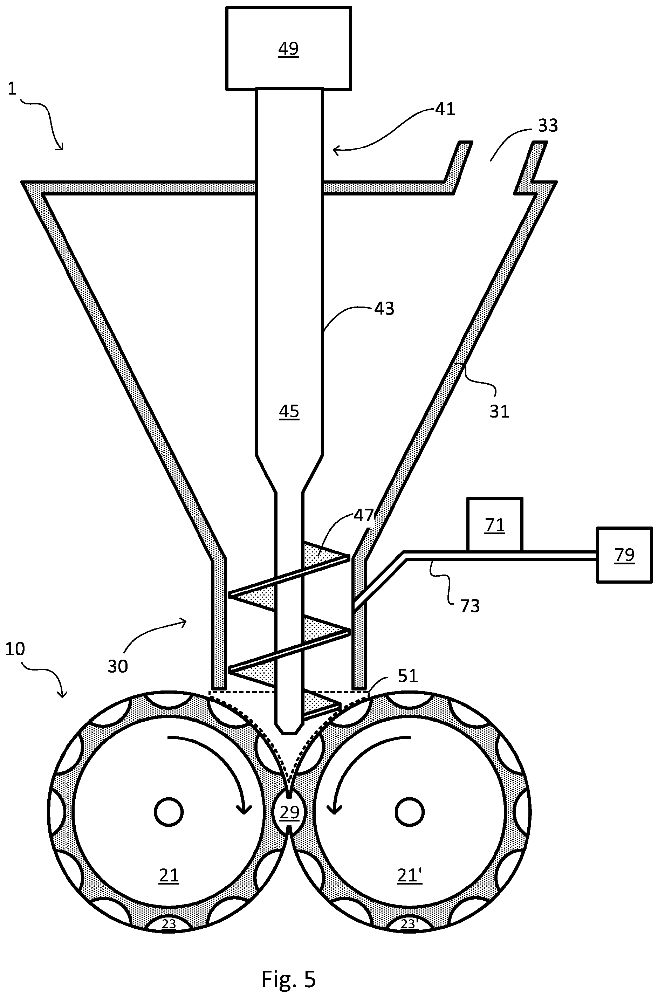

Alternatively, each injection line may extend through a side wall of the material supply tank in order to inject powder into the material supply tank. Preferably, this may be performed at such a position as to allow powder to be dosed deep in the force-fed volume, in proximity to the nip, whilst avoiding any difficulties associated with having the injection line extend through a moving part. In such a case, each line outlet may be arranged at an inside surface of the side wall immediately adjacent to the volume occupiable by the screw flighting. An example of such an embodiment is schematically illustrated in Figure 5.

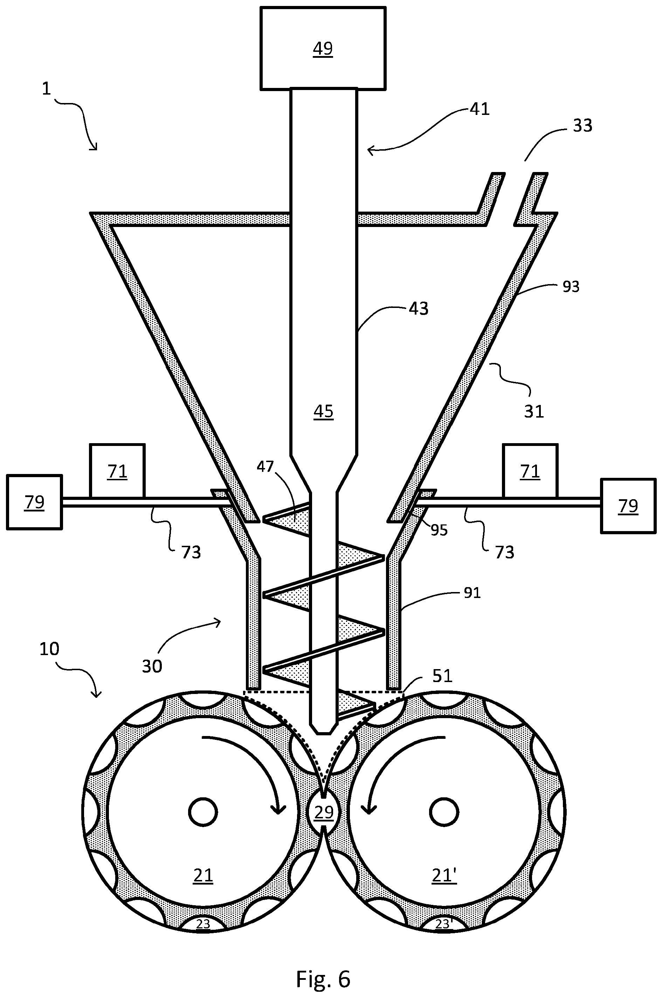

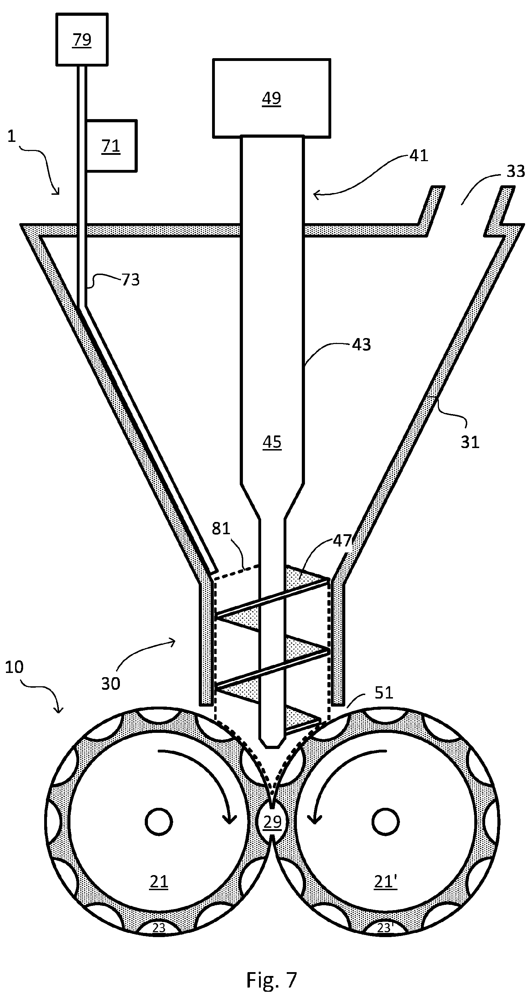

Alternatively, a side wall of the material supply tank may comprise a lower side wall section 91 arranged proximal to the briquetting press 10, and an upper side wall section 93 arranged distal to the briquetting press 10. The upper side wall section 93 partially underlaps the lower side wall section 91 such that a gap 95 is formed between lower side wall section and upper side wall section. The gap is open to an interior volume of the material supply tank at an end proximal to the briquetting press 10 and is sealed at an end distal to the briquetting press. Each injection line 73 is arranged to be able to inject powder into the gap 95. An example of such an embodiment is schematically illustrated in Figure 6. Such an embodiment permits the gap size and injection line dimeter to be tailored relatively freely, allowing the apparatus to be dimensioned for optimal supply of powder without other constraints. The placement and arrangement of the gap also allows reasonably easy access in the event of blockage. Alternatively, each injection line may extend along an inside surface of a side wall of the material supply tank. In such case, each line outlet may be arranged at an inside surface of the side wall in proximity to the volume occupiable by the screw flighting. Such an embodiment may be implemented by retrofitting of an existing hot briquetting apparatus and still provides sufficiently good mixing of the powder with the sponge iron pellets, with little risk of powder being accumulated in the material supply tank, due to the powder being injected into the force-fed volume. An example of such an embodiment is schematically illustrated in Figure 7. The line inlet is arranged exterior to the material supply tank. The injection line 73 extends vertically downwards through a lid of the material supply tank. At the point where the injection line meets the interior wall of the material supply tank, the injection line is arranged to extend downwards along the wall towards the screw flighting. The injection line may be arranged in direct contact with the wall or be fixedly attached at a distance to the wall by one or more spacers or supports. The line outlet may be arranged in proximity to the volume occupiable by the screw flighting, in order to be able to inject powder into this volume. Alternatively, any combination of the aforementioned means for injection of powder may be used.

### Method

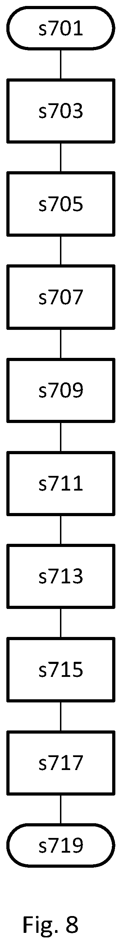

A method for producing hot briquetted iron (HBI) comprising a powder, using the apparatus as described herein is illustrated as a flow chart in Figure 8.

Step s701 denotes the start of the method. In step s703, hot sponge iron pellets are provided to the material supply tank of the apparatus. In step s705, the hot sponge iron pellets are conveyed towards the nip of the briquetting press using the screw feeder. In step s707, powder is provided to the powder dosing unit of the apparatus. In step s709, pressurized carrier gas is provided to the line inlet of the injection line in order to obtain a predetermined gas flow. In step s711, the powder is dosed at a predetermined rate to the injection line, thereby injecting the powder into a volume occupiable by the screw flighting and/or into a volume in proximity to the nip of the briquetting press, thereby forming a mixture of the hot sponge iron pellets and the powder. In step s713, the rollers are counter-rotated synchronously, thereby briquetting the mixture of the hot sponge iron pellets and the powder. Step s719 denotes the end of the method.

The hot briquetting may be performed using process parameters typical in the art. For example, hot briquetting may be performed at a temperature in excess of 600 °C, such as a temperature of from about 600 °C to about 800 °C, or from about 650 °C to about 750 °C, such as about 700 °C.

The hot sponge iron pellets may preferably be essentially free of carbon, such as the sponge iron pellets obtained as the product of a shaft-based direct reduction process wherein only essentially carbon-free reducing gas is used. The reducing gas may for example consist essentially of hydrogen and optionally gases that are inert in the process (e.g. nitrogen, argon). A pilot plant capable of producing such carbon-free sponge iron pellets using hydrogen as reducing gas is presently in operation in Luleå, Sweden. Note that sponge iron pellets, otherwise known as DRI type (B), typically have dimensions in the centimetre scale, and therefore cannot form a homogenous mixture with powders in the way that sponge iron fines, i.e. DRI type (C) may.

By essentially free of carbon it is meant that no carbon is purposively introduced into the sponge iron pellet, e.g. by use of a carburizing gas. However, minor quantities of carbon may be present in the pellet due to retention of carbon-containing components of the unreduced pellets. For example, iron ore pellets are typically coated with carbonate-containing minerals (e.g. lime or cement) in order to prevent agglomeration and sticking in the direct reduction shaft, and carbon derived from such carbonates may be residual in the sponge iron pellets.

The sponge iron pellet may comprise less than about 0.1 wt% carbon, preferably less than about 0.05 wt% carbon. For comparison, DRI produced by conventional fossil means typically comprises from about 1 wt% to about 5 wt% carbon.

The volume of powder used in the method may depend on a number of factors, including but not limited to the desired weight ration of powder to sponge iron, the density of the powder, the density of the hot sponge iron pellets, and, if carbon is used as the powder, the percentage of fixed carbon in the carbon powder. However, a suitable volume ratio of powder may range from about 0.5 vol% to about 40 vol% relative to the volume of the hot sponge iron pellets, such as from about 1 vol% to about 20 vol%, such as from about 5 vol% to about 10 vol%.

The powder may preferably be carbon powder. The carbon powder may preferably be derived at least in part, and preferably primarily, from renewable resources. For example, the carbon powder may be a biocoal derived from high temperature pyrolysis of biomass, such as lignocellulosic biomass. The biobased content of a sample may be determined using e.g. Method B of ASTM D6866-22 "Standard Test Methods for Determining the Biobased Content of Solid, Liquid, and Gaseous Samples Using Radiocarbon Analysis". Using Method B of ASTM D6866-22, the carbon powder may have a biobased content of greater to 50 wt%, such as greater than 80 wt%, such as greater than 90 w%. If the carbon powder is derived at least in part from renewable resources, it may preferably have a radiocarbon age of less than 10 000 years before present, preferably less than 1000 years before present, even more preferably less than 100 years before present. Highly reliable methods of radiocarbon dating carbon powders such as biocoal and coal, using methods such as accelerator mass spectrometry (AMS), are known in the art. However, non-renewable carbon powders, such as anthracite powder may also be used. Relatively high-density carbon powders such as anthracite may provide the advantage of having a lesser tendency to be borne out of the apparatus in process off-gases.

The carbon powder should be sufficiently finely crushed in order to be integrated into the iron briquette and dissolve efficiently in the liquid iron. However, it should not be so finely crushed as to create problems with dusting and material handling. Besides these general considerations, the particle size of the carbon powder has not been found to be critical in the experiments performed to date. A powder having an average particle size (D₅₀, MMD) of less than about 3 mm, such as from about 0.01 mm to about 2 mm may be suitable. Preferably, a carbon powder with a high percentage fixed carbon may be used, such as a carbon powder having greater than about 80 wt% fixed carbon, such as greater than about 90 wt% fixed carbon.

The hot briquetted iron produced by the method may comprise from about 95 wt% to about 99.5 wt% compressed sponge iron pellets, and from about 0.5 wt% to about 5 wt% carbon powder. This should ensure sufficient carbon in order to optimise performance in the EAF.

The carrier gas may be an inert gas, such as nitrogen or argon. The flow of carrier gas used may depend on a number of factors, including but not limited to the particle size and density of the powder to be added. A suitable carrier gas flow may be from about 300 I/min to about 700 I/min, such as from about 400 l/min to about 600 I/min, such as about 450 l/min to about 550 I/min. A suitable volume ratio of carrier gas to powder may be from about 5:1 to about 3000:1, such as from about 10:1 to about 300:1, such as from about 50:1 to about 200:1, such as from about 80:1 to about 140:1.

The method may optionally comprise further steps known in the art and performed after briquetting step s713. For example, the produced string of briquettes may be separated in a step s715 using a briquette string separator apparatus, and/or cooled in a step s717 using a briquette cooler apparatus.

## Claims

1. An apparatus (1) for producing hot briquetted iron (HBI), the apparatus comprising
- a briquetting press (10) comprising two rollers (21, 21'), each roller comprising a plurality of pockets (23, 23'), wherein the two rollers are arranged to be synchronously counter-rotatable, thereby forming a continuous series of cooperating pockets defining briquetting cavities at a nip (29) of the briquetting press; and
- a force feeder arrangement (30) comprising a material supply tank (31) arranged to be able to contain a hot sponge iron pellet feed to be fed to the briquetting press; and a screw feeder (41) comprising a screw (43) arranged within the material supply tank and arranged to be able to convey the sponge iron pellet feed contained within the material supply tank towards the nip of the briquetting press, wherein the screw comprises a screw shaft (45) and a screw flighting (47) arranged on the screw shaft at an end of the screw shaft in proximity to the nip of the briquetting press;
and wherein the apparatus further comprises
- a powder injection arrangement (70), the powder injection arrangement comprising a powder dosing unit (71) and at least one injection line (73),
wherein the powder dosing unit is arranged to be able to dose powder at a predetermined rate to the at least one injection line,
wherein each injection line extends from a line inlet (75) to a line outlet (77), wherein each line inlet is arranged to be connectible to a source of pressurized carrier gas (79) and each line outlet is arranged to be able to inject powder into the material supply tank, said apparatus being **characterised in that** each injection line extends inside of the screw shaft, and wherein each line outlet is arranged at an end of the screw shaft that is in proximity to the nip of the briquetting press.

2. The apparatus according to claim 1, wherein each line outlet is arranged to be able to inject powder into a volume occupiable by the screw flighting and/or into a volume in proximity to the nip of the briquetting press.

3. The apparatus according to any of claims 1-2, wherein the powder injection arrangement comprises a single injection line.

4. The apparatus according to any of claims 1-2, wherein the powder injection arrangement comprises a plurality of injection lines.

5. The apparatus according to claim 4, wherein the plurality of injection lines have a common line inlet section and separate line outlets.

6. The apparatus according to claim 5, wherein the powder dosing unit is arranged to be able to dose powder to the common inlet section of the plurality of injection lines.

7. The apparatus according to any one of the preceding claims, wherein the powder dosing unit comprises a controllable rotary valve feeder.

## Patentansprüche

1. Vorrichtung (1) zur Herstellung von heißbrikettiertem Eisen (HBI), wobei die Vorrichtung umfasst
- eine Brikettierpresse (10), die zwei Walzen (21, 21') umfasst, wobei jede Walze eine Mehrzahl von Taschen (23, 23') aufweist, wobei die beiden Walzen synchron gegenläufig drehbar angeordnet sind, wodurch eine fortlaufende Reihe von zusammenwirkenden Taschen gebildet wird, die Brikettierhohlräume an einem Walzenspalt (29) der Brikettierpresse definieren; und
- eine Krafteinspeiseanordnung (30), die einen Materialzuführbehälter (31) umfasst, der ausgelegt ist, um eine heiße Schwammeisenpelleteinspeisung zur Einspeisung zu der Brikettierpresse aufnehmen zu können; und eine Schneckeneinspeiseeinrichtung (41), die eine Schnecke (43) umfasst, die innerhalb des Materialzuführbehälters angeordnet und ausgelegt ist, um die Schwammeisenpelleteinspeisung, die innerhalb des Materialzuführbehälters enthalten ist, in Richtung des Walzenspalts der Brikettierpresse zu fördern, wobei die Schnecke eine Schneckenwelle (45) und einen Schneckengang (47) umfasst, der auf der Schneckenwelle an einem Ende der Schneckenwelle in der Nähe des Walzenspalts der Briquettierpresse angeordnet ist;
und wobei die Vorrichtung ferner umfasst:
- eine Pulvereinspritzanordnung (70), wobei die Pulvereinspritzanordnung eine Pulverdosiereinheit (71) und mindestens eine Einspritzleitung (73) umfasst,
wobei die Pulverdosiereinheit ausgelegt ist, um Pulver in einer vorbestimmten Rate an die zumindest eine Einspritzleitung dosieren zu können,
wobei sich jede Einspritzleitung von einem Leitungseinlass (75) zu einem Leitungsauslass (77) erstreckt, wobei jeder Leitungseinlass so ausgelegt ist, dass er mit einer Druckträgergasquelle (79) verbunden werden kann, und jeder Leitungsauslass so ausgelegt ist, dass er Pulver in den Materialzufuhrbehälter einspritzen kann, wobei die Vorrichtung **dadurch gekennzeichnet ist, dass** jede Einspritzleitung sich innerhalb der Schneckenwelle erstreckt, und wobei jeder Leitungsauslass an einem Ende der Schneckenwelle angeordnet ist, das sich in der Nähe des Walzenspalts der Brikettierpresse befindet.

2. Vorrichtung nach Anspruch 1, wobei jeder Leitungsauslass so ausgelegt ist, dass er Pulver in ein Volumen, das durch die Schneckengangbewegung belegt ist, und/oder in ein Volumen in der Nähe des Walzenspalts der Brikettierpresse einspritzen kann.

3. Vorrichtung nach einem der Ansprüche 1 bis 2, wobei die Pulvereinspritzsanordnung eine einzelne Einspritzleitung umfasst.

4. Vorrichtung nach einem der Ansprüche 1 bis 2, wobei die Pulvereinspritzsanordnung eine Mehrzahl von Einspritzleitungen umfasst.

5. Vorrichtung nach Anspruch 4, wobei die Mehrzahl von Einspritzleitungen einen gemeinsamen Leitungseinlassabschnitt und getrennte Leitungsauslässe aufweisen.

6. Vorrichtung nach Anspruch 5, wobei die Pulverdosiereinheit ausgelegt ist, um Pulver zu dem gemeinsamen Einlassabschnitt der Mehrzahl von Einspritzleitungen dosieren zu können.

7. Vorrichtung nach einem der vorhergehenden Ansprüche, wobei die Pulverdosiereinheit eine steuerbare Drehventileinspeiseeinrichtung umfasst.

## Revendications

1. Appareil (1) pour la production de fer briqueté à chaud (HBI), l'appareil comprenant
- une presse à briquettes (10) comprenant deux rouleaux (21, 21'), chaque rouleau comprenant une pluralité de poches (23, 23'), les deux rouleaux étant disposés de manière à pouvoir tourner en sens inverse de manière synchrone, formant ainsi une série continue de poches coopérantes définissant des cavités à briquettes au niveau d'un pincement (29) de la presse à briquettes ; et
- un dispositif d'alimentation forcée (30) comprenant un réservoir d'alimentation en matériau (31) conçu pour contenir une charge de granulés de fer spongieux chauds destinés à alimenter la presse à briquettes ; et un dispositif d'alimentation à vis (41) comprenant une vis (43) disposée à l'intérieur du réservoir d'alimentation en matériau et conçue pour transporter la charge de granulés de fer spongieux contenue dans le réservoir d'alimentation en matériau vers la ligne de contact de la presse à briquettes, la vis comprenant un arbre à vis (45) et une vis sans fin (47) disposée sur l'arbre à vis à une extrémité de l'arbre à vis à proximité de la ligne de contact de la presse à briquettes ;
et dans lequel l'appareil comprend en outre
- un dispositif d'injection de poudre (70), le dispositif d'injection de poudre comprenant une unité de dosage de poudre (71) et au moins une ligne d'injection (73),
dans lequel l'unité de dosage de poudre est conçue pour pouvoir doser de la poudre à un débit prédéterminé vers la ou les lignes d'injection,
dans lequel chaque ligne d'injection s'étend d'une entrée de ligne (75) à une sortie de ligne (77), dans lequel chaque entrée de ligne est agencée pour pouvoir être connectée à une source de gaz porteur sous pression (79) et chaque sortie de ligne est agencée pour pouvoir injecter de la poudre dans le réservoir d'alimentation en matériau, ledit appareil étant **caractérisé en ce que** chaque ligne d'injection s'étend à l'intérieur de l'arbre à vis, et dans lequel chaque sortie de ligne est agencée à une extrémité de l'arbre à vis qui est à proximité de la ligne de contact de la presse à briquettes.

2. Appareil selon la revendication 1, dans lequel chaque sortie de ligne est agencée pour pouvoir injecter de la poudre dans un volume occupable par la vis sans fin et/ou dans un volume à proximité de la ligne de contact de la presse à briquettes.

3. Appareil selon l'une quelconque des revendications 1 à 2, dans lequel le dispositif d'injection de poudre comprend une seule ligne d'injection.

4. Appareil selon l'une quelconque des revendications 1 à 2, dans lequel le dispositif d'injection de poudre comprend une pluralité de lignes d'injection.

5. Appareil selon la revendication 4, dans lequel la pluralité de lignes d'injection ont une section d'entrée de ligne commune et des sorties de ligne séparées.

6. Appareil selon la revendication 5, dans lequel l'unité de dosage de poudre est agencée pour pouvoir doser de la poudre dans la section d'entrée commune de la pluralité de lignes d'injection.

7. Appareil selon l'une quelconque des revendications précédentes, dans lequel l'unité de dosage de poudre comprend un dispositif d'alimentation à vanne rotative contrôlable.
